# EUROPEAN PATENT APPLICATION

(11) **EP 3 700 139 A1**
(43) Date of publication of application: **26.08.2020**
(21) Application number: 19159166.8
(22) Date of filing: 25.02.2019
(51) Int. Cl.: H04L 12/26, H04L 29/06

(54) **PROXY SUPPLICANT ON GPON ACCESS DEVICE**

(71) Applicant: Nokia Solutions and Networks Oy, 02610 Espoo (FI)
(72) Inventor: JAGANNATHAN, Aravindan, 600096 Tamil Nadu (IN); UDA, Naga Satish, 600096 Tamil Nadu (IN); JOHN PRABAKARAN, Xavier, 600096 Tamil Nadu (IN)
(74) Representative: Novagraaf Technologies

(57) **Abstract**

A network apparatus for authenticating supplicants, the network apparatus comprising a plurality of ports, each connectable on one end to a passive optical network link and on another end to a secured network, wherein the network apparatus is configured to receive on a first port of said plurality of ports a first and second access request of a respective first and second supplicant, and wherein the network apparatus is configured to associate at least said second supplicant with a second port of said plurality of ports, said second port differing from said first port.

## Description

### Field of Invention

The field of invention relates to a testing of an authentication of supplicants in network apparatuses such as Gigabit-capable Passive Optical Network (GPON) access devices. Specific embodiments relate to a network apparatus for authenticating supplicants, the network apparatus comprising a plurality of ports, each connectable on one end to a passive optical network link and on another end to a secured network, a computer apparatus for testing said network apparatus, a testing method to be performed by the network apparatus, a testing method to be performed by the computer apparatus, and a computer program product.

### Background

This invention relates to a dotlx authentication in a network apparatus, such as a GPON Access Device. IEEE 802.1x standard defines a mechanism to authenticate a device which connects to a Local Area Network (LAN) port and the standard supports different authentication algorithms using the Extensible Authentication Protocol (EAP). EAP is an authentication framework, not a specific authentication mechanism. EAP provides some common functions and 'negotiation of authentication' methods called EAP methods. Although the invention was first realized using GPON Access Devices, the invention can be extended without undue burden to other Access Devices usable in the 802.1x standard.

It is common for a network to be tested, for example before a new network is set up or after an update of an existing network. Therefore, a network which authenticates supplicants according to the IEEE 802.1x standard is typically built and tested in a lab environment in order to test its functionality. One of the tests that typically is performed, is testing whether the authentication of supplicants according to the IEEE 802.1x standard works as intended.

Currently, the network apparatus receives a connection request from a supplicant and generates an access-request to an authentication server. The authentication server will then check whether the supplicant receives access to the network or not. When the test is done on a test network for a single supplicant, a proof-of-concept is achieved.

In more realistic networks, though, many supplicants request to be connected to the network, and therefore testing on a test network of the network on larger scales is desirable. Currently, since real-world implementations are typically networks which comprise many devices, testing on larger scales is a procedure requiring a setup of an equal amount of devices in the lab of which a complexity increases with the network it is testing. More specifically, when increasing the number of supplicants, a larger amount of connection requests are sent to the network apparatus. Each of the number of supplicants is software running in a client device, such as a laptop, that is connected to the test network. Thus, when increasing the amount of supplicants that are tested in the lab, the amount of client devices increase accordingly. Or, in other words, the increasing of the scale of the network increases the scale and the complexity of the test network in the lab.

Furthermore, supplicants are typically connected with the network apparatus via other devices, such as Optical Network Terminals (ONT), which further increase the amount of devices in the network, and thus increase the size and complexity of the network, and thus also the size and complexity of the test network.

Thus, when scaling the testing of the authentication of a large amount of supplicants, for example more than 73,000 supplicants, the test network comprises at least the same amount of client devices as supplicants, and typically also several other devices, such as ONTs. This results in a network of high complexity, a size of which grows super-linearly with the amount of supplicants.

Thus, the testing of 802.1x sessions to large scales with the network apparatus in in a lab environment has several concerns. Due to the increasing amount of devices and increasing complexity of the test network, it becomes more challenging to pinpoint and troubleshoot connectivity issues which may arise. Further, in order to be able to arrange a test setup, a larger lab space is to be provided, which leads to increasing maintenance costs such as real estate costs.

### Summary

It is an aim of embodiments of the invention to allow a scaling of an amount of supplicants during a testing of an authentication to a network in a more efficient manner.

According to a first aspect of the invention, there is provided a network apparatus for authenticating supplicants, the network apparatus comprising a plurality of ports, each connectable on one end to a passive optical network link and on another end to a secured network, wherein the network apparatus is configured to receive on a first port of said plurality of ports a first and second access request of a respective first and second supplicant, and wherein the network apparatus is configured to associate at least said second supplicant with a second port of said plurality of ports, said second port differing from said first port.

Embodiments of the network apparatus according to the invention are based on the insight that access requests, for example a first and second access requests of supplicants can solely be received by a first port of a plurality of ports. By configuring the network apparatus to associate at least said second supplicant with a second port of the plurality of ports, the access requests can be seen as if they were received by the second port. In other words, an access request is received by the network apparatus, such as a GPON-LT, at a port which is different than the port the network apparatus will use to process the access request.

This results in a system which can receive access requests from supplicants at a single port, while still testing the network apparatus as if it is using multiple ports. The second supplicant is virtually assigned to a second port, as the second port does not physically receive any access requests. When scaling the system to a larger amount of supplicants, the network apparatus does not need to be provided with an equal amount of ports to receive access requests from said larger amount of supplicants. Therefore, the network apparatus allows a scaling of an amount of supplicants during a testing of an authentication to a network in a more efficient manner. Further, the network apparatus allows the testing of further ports, i.e. the second, third,... port, without physically connecting an applicant to said further port.

In an embodiment, the network apparatus is configured to associate at least said second supplicant with said second port based on a supplicant translation table stored at the network apparatus, wherein said supplicant translation table is configured for mapping at least said second supplicant to said second port. In this manner, the network apparatus can simply provide a manner of associating the access request of a supplicant with a port of the network apparatus. The supplicant translation table will associate a supplicant with a port of the network apparatus for example by mapping the second supplicant with the second port. In certain embodiments, when scaling to a larger amount of supplicants, each further supplicant, i.e. a third supplicant, is associated with a further port, i.e. a third port, of the network apparatus by use of the translation table. By using a translation table, the relation between each supplicant and its respective port is tracked, which facilitates the authentication of supplicants. The use of the translation table is further advantageous when there are more supplicants sending access requests than there are ports available. The translation table keeps track of which ports are currently in use by a supplicant and which ports are capable to be associated with a supplicant, which increases an efficiency of authenticating supplicants.

In a further developed embodiment, associating said second supplicant with said second port comprises storing an indication that said second supplicant is logically connected to said second port via an intermediate optical network terminal. When storing an indication that said second supplicant is logically connected to said second port, the above mentioned problems can be solved more easily.

In an embodiment, the network apparatus is configured to obtain respective first and second credentials of said first and second supplicant, to forward said respective first and second credentials to an authentication server, and, if the authentication server responds with a positive response to the second credentials of said second supplicant, to set said second port to an authorized state allowing said second supplicant access to the secured network, and, if the authentication server responds with a negative response to the second credentials of said second supplicant, to set said second port to an unauthorized state disallowing said second supplicant access to the secured network.

When authenticating a supplicant, the supplicant typically provides credentials, such as a username and password, to an authentication server. These credentials are typically used to prove the supplicant's authenticity to the authentication server. These credentials are sent to the network apparatus and received at a port. Said network apparatus forwards said credentials to the authentication server. The authentication server is configured to authenticate whether or not the credentials are valid, by for example checking in a database comprising credentials of clients. If the credentials are valid, the authentication server will respond with a positive response, if said credentials are non-valid, the authentication server will respond with a negative response. A positive response means that a supplicant is to be allowed access to the secured network, and therefore said positive response sets the port related to the supplicant to an authorized state. This authorized state then allows the supplicant to access the secured network. A negative response means that the supplicant is not to be allowed access to the secured network as its credentials are non-valid. Therefore said negative response will set the port related to the supplicant to an unauthorized state, which disallows said supplicant to access the secure network.

In an embodiment, said supplicant translation table is also configured for mapping said second supplicant to said first port, and wherein the network apparatus, if it needs to transmit a frame to said second supplicant, is configured to transmit said frame on said first port based on said supplicant translation table. Since an authentication of a second supplicant typically requires multiple messages, such as messages comprising a challenge-handshake authentication protocol for verifying the credentials of said second supplicant, a mapping of the second supplicant to the first port allows the network apparatus to communicate with the second supplicant through the first port. This allows the communication of the second supplicant with the network apparatus through the first port, not the second port. This is advantageous as it allows further communication of the network apparatus to the second supplicant in the case that the second supplicant is virtually assigned to the second port.

In a second aspect of the invention, there is provided a computer apparatus for testing a network apparatus according to any one of the claims 1-5, the computer apparatus being connectable to the network apparatus via an intermediate optical network terminal, and the computer apparatus comprising at least one processor and at least one memory storing instructions for causing the computer apparatus to generate at least a first and second supplicant having different identifiers indicating logical provenance from at least a first and second mutually different optical network terminals.

Embodiments of the computer apparatus according to the invention are based on the insight that the computer apparatus comprises at least one memory storing instructions for causing the computer apparatus to generate at least a first and a second supplicant. Since the access requests of the supplicants are solely received in the first port, a computer apparatus can be provided which is configured to generate at least a first and second supplicant having different identifiers indicating logical provenance from at least a first and second mutually different optical network terminals. These different identifiers allow the network apparatus to associate the first and second supplicants to different optical network terminals, or in other words, different ports. Therefore, the network apparatus according to the invention, allows for a single computer apparatus to generate multiple supplicants. This is advantageous as it reduces the amount of computer apparatuses generating a supplicant to a single computer apparatus, which allows a scaling of an amount of supplicants during a testing of an authentication to a network in a more efficient manner.

In an embodiment, the instructions are further for causing the computer apparatus to transmit at least a first and second access request of the first and second supplicant to the network apparatus via the intermediate optical network terminal.

According to a third aspect of the invention, there is provided a network system comprising at least one network apparatus according to any one of the claims 1-6 and at least one computer apparatus according to any one of the claims 7-8, wherein the at least one network apparatus and the at least one computer apparatus are configured to communicate with each other via an intermediate optical network terminal.

It will be appreciated that the above described features, advantages and considerations also apply, *mutatis mutandis,* for embodiments of the network system.

According to a fourth aspect of the invention, there is provided a testing method of a network apparatus comprising a plurality of ports, each connectable on one end to a passive optical network link and on another end to a secured network, the testing method comprising receiving on a first port of said plurality of ports a first and second access request of a respective first and second supplicant, and associating at least said second supplicant with a second port of said plurality of ports, said second port differing from said first port.

It will be appreciated that the above described features, advantages and considerations relating to the network apparatus also apply, *mutatis mutandis,* for embodiments of testing method.

In an embodiment, said associating comprises associating at least said second supplicant with said second port based on a supplicant translation table stored at the network apparatus.

In a further developed embodiment, an indication that said second supplicant is logically connected to said second port via an intermediate optical network terminal is stored, in order to associate said second supplicant with said second port.

In a specific embodiment, the supplicant translation table also maps said second supplicant to said first port, and wherein the testing method comprises transmitting said frame on said first port based on said supplicant translation table if the network apparatus needs to transmit a frame to said second supplicant.

According to a fifth aspect of the invention, a testing method of a computer apparatus, the testing method comprising generating at least a first and second supplicant having different identifiers indicating logical provenance from at least a first and second mutually different optical network terminals.

It will be appreciated that the above described features, advantages and considerations also apply, *mutatis mutandis,* for embodiments of the testing method of the computer apparatus.

In an embodiment, the testing method further comprises transmitting at least a first and second access requests of the first and second supplicant to a network apparatus via an intermediate optical network terminal situated between the computer apparatus and the network apparatus.

According to a sixth aspect of the invention, a computer readable medium comprising either instructions for causing a network apparatus according to any one of the claims 1-5 to perform at least the testing method of any one of the claims 9-12, or instructions for causing a computer apparatus according to any one of the claims 6-7 to perform at least the testing method according to any one of the claims 13-14. It will be appreciated that the above described features, advantages and considerations also apply, mutatis mutandis, for embodiments of the computer program product and the digital data storage medium, respectively.

The invention will now be described in more details with respect to the drawings illustrating some preferred embodiments of the invention. In the drawings:
figure 1 illustrates a schematic flow of an authentication according to the prior art;
figure 2 illustrates a schematic packet flow view according to the prior art;
figure 3 illustrates a schematic packet flow view according to an embodiment of the invention;
figure 4 illustrates schematically a sequence diagram for an embodiment of method according to the invention; and
figure 5 illustrates schematically a detailed packet flow from a supplicant and a CVLAN mapping table according to an embodiment of the invention.

In the drawings a same reference number has been allocated to a same or analogous element.

### Description of embodiments

802.1x authentication typically involves 3 parties: a supplicant, an authenticator and an authentication server. In general a supplicant is software running on a client device such as a laptop or PC that is connected to a Local Area Network (LAN). The supplicant will transmit credentials to the authenticator. The authenticator is an Access Device (such as the NOKIA Fiber FTTU), and an authentication server is a host running software supporting remote authentication dial-in user service (RADIUS). The authenticator acts like a security guard to a protected network.

The supplicant is not allowed access through the authenticator to the protected side of the network until the supplicant's identity has been validated and authorized. With 802.1x port-based authentication, the supplicant transmits credentials, such as user name/password, to the authenticator, and the authenticator forwards the credentials to the authentication server for verification. If the authentication server determines the credentials are valid, the client device related to the supplicant 100 can access resources located on the protected side of the network.

Access Devices, such as a Gigabit-capable Passive Optical Network (GPON) Access Device, can act as an authenticator to support authentication for the devices which are connected to an Optical Network Terminal User Network Interface (ONT-UNI). A GPON-Line Terminal (GPON-LT) will terminate EAP over LAN (EAPOL) packets and pass the user credentials to a GPON-Network Terminal (GPON-NT) via inter-process communication. The GPON-NT authenticates the user via a RADIUS Server. The authentication protocols between the GPON-NT and RADIUS server is called EAP over RADIUS (EAPOR).

In the prior art, an Optical Line Terminal (OLT) receives connection requests from supplicants and generates access-requests to the RADIUS server. Once the credentials are validated by the RADIUS server, the authenticator will allow or refuse the user device to access the network, by allowing or refusing an access through the ONT-UNI, respectively. The OLT typically comprises the authenticator.

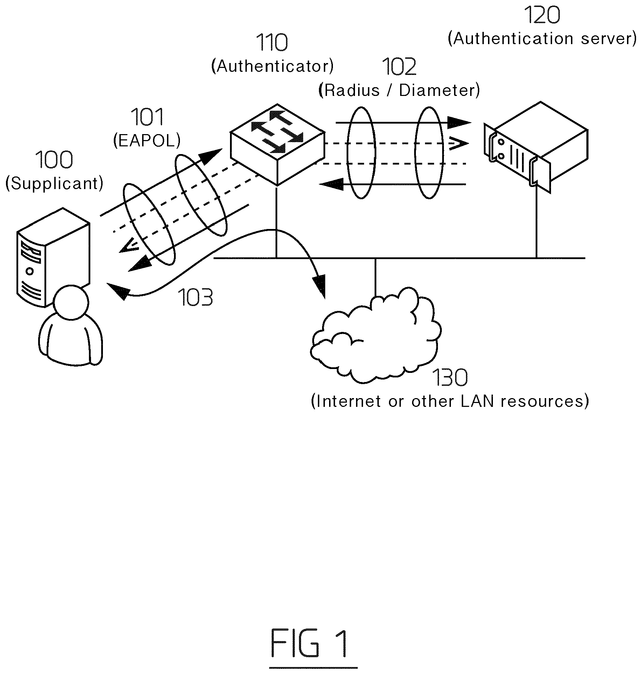

Figure 1 illustrates a schematic flow of an authentication according to the prior art. In figure 1, a supplicant 100 is connected with an authenticator 110, an authentication server 120 and a network 130. The authenticator 110 comprises at least one port, which can receive access requests of the supplicant 100.

According to the 802.1x standard, in order to obtain access to the secured network 130, the supplicant 100 is to be authorized by the authentication server 120. In order to obtain said access to the secured network 130, the supplicant 100 transmits 101 an access request. Preferably said access request is compliant with Extensible Authentication Protocol (EAP) over LAN (EAPOL). The access requests can comprise credentials, such as a username/password combination.

The authenticator 110 then forwards 102 the received credentials to the authentication server 120. The authentication server 120 attempts to validate the credentials. If the validation of the credentials is successful, the authentication server 120 responds with a positive response to the credentials of the supplicant 100. If the validation of the credentials failed, the authentication server 120 responds with a negative response to the credentials of the supplicant 100.

The negative response of the authentication server 120 can be received by the authenticator 110. After receiving the negative response of the authentication server 120, the authenticator 110 can set the at least one port to an unauthorized state disallowing the supplicant 100 access 103 to the network 130.

The positive response of the authentication server 120 can be received by the authenticator 110. After receiving the positive response of the authentication server 120, the authenticator 110 can set the at least one port to an authorized state allowing the supplicant 100 access 103 to the network 130.

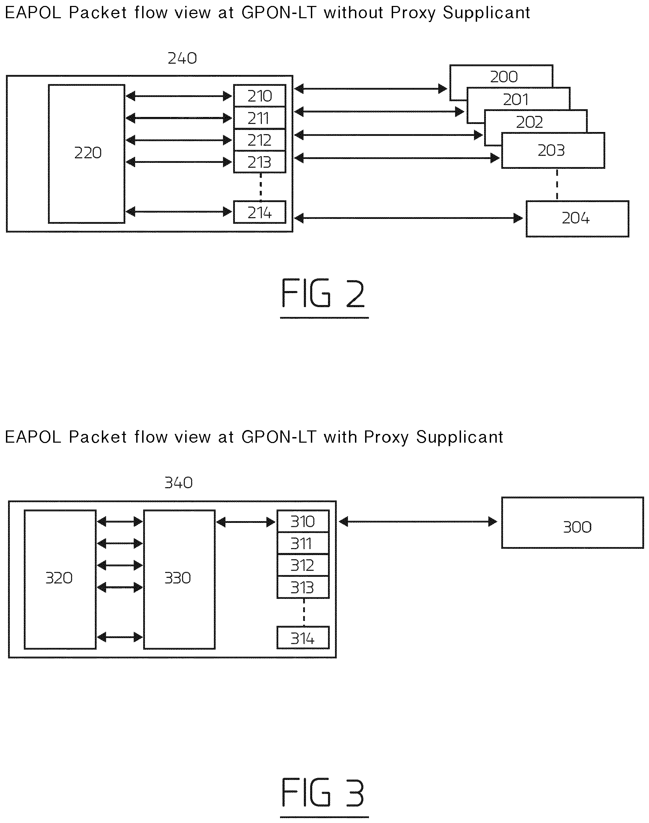

Figure 2 illustrates a schematic packet flow view according to the prior art, wherein multiple ports 210-214 of a network apparatus 240 are connected with supplicants 200-204. The network apparatus 240 fulfills the role of authenticator. The network apparatus 240 comprises multiple ports 210-214 which are configured to receive access requests of supplicants 200-204. Each supplicant of the supplicants 200-204 can be software running on a client device, such as a laptop, that is connected to the network. More specifically, figure 2 shows a first port 210 which can receive an access request from a first supplicant 200, a second port 211 which can receive an access request from a second supplicant 201, and so on..., and an nth port 214 which can receive an access request from an nth supplicant 204. Each of the multiple ports 210-214 is controlled by an authenticator 220, such as a dotlx application.

Figure 3 illustrates a schematic packet flow view according to an embodiment of the invention. In figure 3, a network apparatus 340 comprises multiple ports 310-314 which are configured to receive access requests of supplicants. In figure 3, a device 300 running multiple supplicant instances, such as a computer apparatus, is connected to a first port 310 of the multiple ports 310-314. The device 300 running multiple supplicant instances is configured to transmit multiple access requests, each of the multiple access requests being related to one of the multiple supplicant instances. The multiple access requests are received by the first port 310 of the multiple ports 310-314. The skilled person will understand that the device 300 running multiple supplicant instances could for example be a Linux test server, which is capable of generating multiple supplicant instances. The skilled person will further understand that supplicants, supplicant instances relate to the same thing, and can further be called proxy supplicants and/or virtual supplicants.

The network apparatus 340 further comprises an associating module 330 which is configured to associate supplicants of the device 300 running multiple supplicant instances with one of the multiple ports 310-314. The associating module 330 can associate one of the multiple ports 310-314, using a supplicant translation table or another means, stored at the network apparatus 340. More specifically, the associating module 330 is configured to associate a first supplicant of the device 300 running multiple supplicant instances with a first port 310 of the multiple ports 310-314, associate a second supplicant of the device 300 running multiple supplicant instances with a second port 311 of the multiple ports 310-314, and so on..., and associate an nth supplicant of the device 300 running multiple supplicant instances with an nth port 314 of the multiple ports 310-314. The associating module 330 can further be configured to store an indication wherein said supplicant translation table is configured for mapping each of the multiple supplicant instances with its respective port 310-314. Each of the multiple ports associated with one of the multiple supplicant instances of the device 300 running multiple supplicant instances are controlled by an authenticator 320, such as a dotlx application. More specifically, after the associating by the associating module 330, the authenticator 320 can treat access requests as if coming from different supplicants, which may be distributed across various ONT-UNI ports.

The skilled person will understand, although in figure 3 a single device 300 with multiple supplicant instances is connected to a port of the network apparatus 340, that a user could connect multiple devices with multiple supplicant instances. Each of the multiple devices could be connected to a same port of the network apparatus 340, or to different ports of the network apparatus 340.

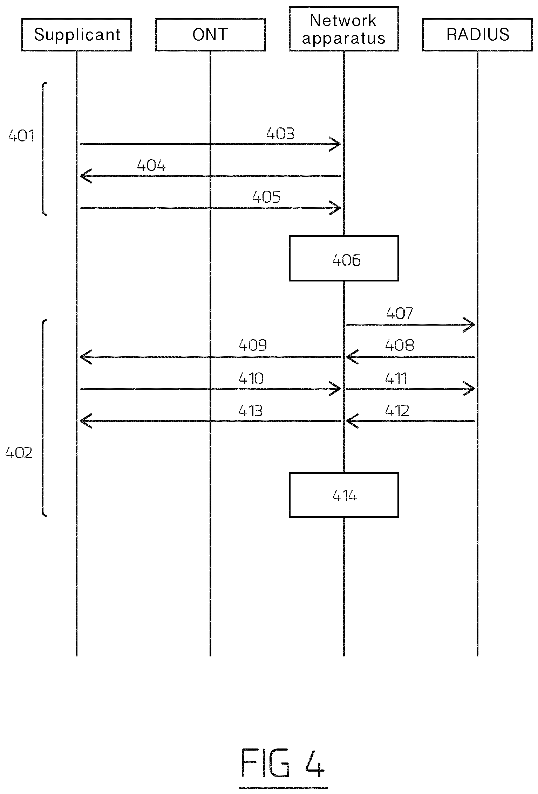

Figure 4 illustrates schematically a sequence diagram for an embodiment of method according to the invention. More specifically, figure 4 shows a sequence diagram for authenticating a supplicant. Before authentication, an authenticator detects the client and enables the client's port, but sets the port to an unauthorized state. In this state, all traffic, except 802.1X messages, is blocked. To start the authentication after a connection is set up between the device with multiple supplicant instances and the network apparatus, a first supplicant will typically transmit 403 an EAPOL Start packet to the network apparatus. After the network apparatus has received the EAPOL Start packet, the network apparatus replies by sending 404 an EAP Request Identity message to obtain the credentials of the first supplicant. The first supplicant, in turn, responds by transmitting 405 an EAP Response Identity message, which comprises at least a EAP Response packet comprising the credentials of the first supplicant, to the network apparatus.

A combination 401 of the transmitting 403 of the EAPOL Start packet, the sending 404 of the EAP Request Identity message and the transmitting 405 of the EAP Response Identity message is performed for multiple supplicant instances in the device running multiple supplicant instances. Preferably, the combination 401 of the transmitting 403 of the EAPOL Start packet, the sending 404 of the EAP Request Identity message and the transmitting 405 of the EAP Response Identity message is performed for each supplicant instance in the device running multiple supplicant instances. In other words, the combination 401 is performed for the first supplicant, the second supplicant, and so on..., and the nth supplicant.

When the network apparatus receives the EAP Response Identity messages, the network apparatus associates 406, by means of the associating module, each supplicant with one of multiple ports. Preferably, the associating 406 is performed based on a supplicant translation table stored at the network apparatus. The supplicant translation table is configured for mapping a first supplicant with a first port, a second supplicant with a second port, and so on..., and an nth supplicant with an nth port.

Next, once the supplicant is associated with its port, the network apparatus forwards 407 the EAP Response packet in the form of an Access Request message to an authentication server. The authentication server, preferably a RADIUS server, attempts to verify the credentials of the supplicant.

Optionally, for example when the authentication server receives conflicting information from a supplicant, requires more information, or simply wishes to decrease the risk of a fraudulent authentication, the authentication server can issue 408 an Access Challenge packet to the network apparatus, which forwards 409 the Access Challenge packet to the supplicant. The supplicant, upon receipt of the Access-Challenge packet, then issues 410 a new Access Request to the network apparatus, which forwards 411 the new Access Request to the authentication server.

The authentication server responds with a positive response to the credentials of the supplicant if the credentials are valid. The authentication server responds with a negative response to the credentials of the supplicant if the credentials are not valid.

The positive response is issued 412 as an Access Accept response, more specifically an EAP Success response. This EAP Success response is sent to the network apparatus, which also forwards said response to the supplicant. Following the EAP Success response, the authenticator sets 414 the port associated with the supplicant to an authorized state allowing the supplicant access to the secured network.

Alternatively, the negative response is issued as an Access Reject response, more specifically an EAP Reject response. This EAP Reject response is sent to the network apparatus, which also forwards said response to the supplicant. Following the EAP Success response, the authenticator does not set the port associated with the supplicant to an authorized state. The port associated with the supplicant remains in the unauthorized state.

A combination 402 of the forwarding 407 of the EAP Response packet in the form of an Access Request message, the issuing 408 of the Access Challenge packet, the issuing 410 of the new Access Request, and the issuing 412 as an Access Accept response is performed for multiple supplicant instances in the device running multiple supplicant instances. Preferably, the combination 402 of the forwarding 407 of the EAP Response packet in the form of an Access Request message, the issuing 408 of the Access Challenge packet, the issuing 410 of the new Access Request, and the issuing 412 as an Access Accept response is performed for each supplicant instance in the device running multiple supplicant instances. In other words, the combination 402 is performed for the first supplicant, the second supplicant, and so on..., and the nth supplicant.

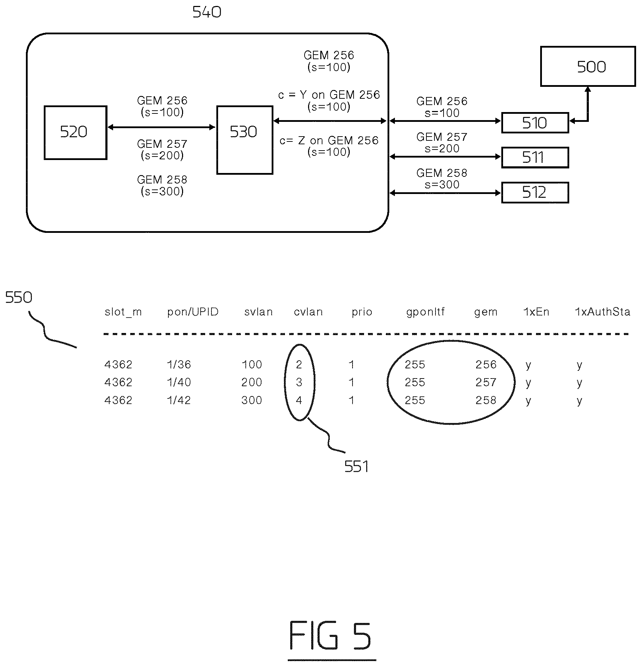

Figure 5 illustrates schematically a detailed packet flow from a supplicant and a CVLAN mapping table according to an embodiment of the invention. More specifically, figure 5 shows a device 500 running multiple supplicant instances. The device 500 running multiple supplicant instances is connected, via an intermediate optical network terminal, to a network apparatus 540. The network apparatus 540 comprises an associating module 530, and an authenticator 520 connected to said associating module 530. The associating module 530 comprises a Customer Virtual LAN (CVLAN) mapping table 550, which executes the role of supplicant translation table. The CVLAN mapping table 550 is populated when an initialization of the associating module 530 occurs, except for a CVLAN field 551. This CVLAN mapping table 550 can be updated when desired.

Before the device 500 running multiple supplicant instances transmits EAPOL packets, each EAPOL packet is assigned a unique CVLAN to identify the supplicant instance. The CVLAN of each supplicant is received by the network apparatus 540 via ONT 510, as each EAPOL packet is transmitted to the network apparatus. When the network apparatus 540 receives an EAPOL packet, the associating module 530 will map the CVLAN of the received EAPOL packet to an available GPON Encapsulation Method (GEM) port and translate the supplicant instance CVLAN to an available service of the mapping table. The skilled person will understand that the GEM port in figure 5 is merely an example of a port and that the invention is not restricted to these GEM ports alone.

Once the mapping is done, the associating module 530 modifies a packet header field of each EAPOL packet, to make the authenticator 520 treat the EAPOL packets as if coming from different supplicants distributed across various ONT ports.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein the instructions perform some or all of the steps of the above-described methods. The program storage devices may be, e.g., digital memories, magnetic storage media such as a magnetic disks and magnetic tapes, hard drives, or optically readable digital data storage media. The embodiments are also intended to cover computers programmed to perform the steps of the above-described methods.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer.

Whilst the principles of the invention have been set out above in connection with specific embodiments, it is to be understood that this description is merely made by way of example and not as a limitation of the scope of protection which is determined by the appended claims.

## Claims

1. A network apparatus for authenticating supplicants, the network apparatus comprising a plurality of ports, each connectable on one end to a passive optical network link and on another end to a secured network, wherein the network apparatus is configured to receive on a first port of said plurality of ports a first and second access request of a respective first and second supplicant, and wherein the network apparatus is configured to associate at least said second supplicant with a second port of said plurality of ports, said second port differing from said first port.

2. The network apparatus according to claim 1, wherein the network apparatus is configured to associate at least said second supplicant with said second port based on a supplicant translation table stored at the network apparatus, wherein said supplicant translation table is configured for mapping the at least said second supplicant to said second port.

3. The network apparatus according to claim 2, wherein associating said second supplicant with said second port comprises storing an indication that said second supplicant is logically connected to said second port via an intermediate optical network terminal.

4. The network apparatus according to any one of claims 1-3, wherein the network apparatus is configured to obtain respective first and second credentials of said first and second supplicant, to forward said respective first and second credentials to an authentication server, and, if the authentication server responds with a positive response to the second credentials of said second supplicant, to set said second port to an authorized state allowing said second supplicant access to the secured network, and, if the authentication server responds with a negative response to the second credentials of said second supplicant, to set said second port to an unauthorized state disallowing said second supplicant access to the secured network.

5. The network apparatus according to any one of claims 2 and 3 or according to claim 4 when dependent on claim 2, wherein said supplicant translation table is also configured for mapping said second supplicant to said first port, and wherein the network apparatus, if it needs to transmit a frame to said second supplicant, is configured to transmit said frame on said first port based on said supplicant translation table.

6. A computer apparatus for testing a network apparatus according to any one of the claims 1-5, the computer apparatus being connectable to the network apparatus via an intermediate optical network terminal, and the computer apparatus comprising at least one processor and at least one memory storing instructions for causing the computer apparatus to generate at least a first and second supplicant having different identifiers indicating logical provenance from at least a first and second mutually different optical network terminals

7. The computer apparatus according to claim 6, wherein the instructions are further for causing the computer apparatus to transmit at least a first and second access request of the first and second supplicant to the network apparatus via the intermediate optical network terminal.

8. A network system comprising at least one network apparatus according to any one of the claims 1-5 and at least one computer apparatus according to any one of the claims 6-7, wherein the at least one network apparatus and the at least one computer apparatus are configured to communicate with each other via an intermediate optical network terminal.

9. A testing method of a network apparatus comprising a plurality of ports, each connectable on one end to a passive optical network link and on another end to a secured network, the testing method comprising receiving on a first port of said plurality of ports a first and second access request of a respective first and second supplicant, and associating at least said second supplicant with a second port of said plurality of ports, said second port differing from said first port.

10. The testing method of claim 9, wherein said associating comprises associating at least said second supplicant with said second port based on a supplicant translation table stored at the network apparatus.

11. The testing method of claim 10, comprising storing an indication that said second supplicant is logically connected to said second port via an intermediate optical network terminal, in order to associate said second supplicant with said second port.

12. The testing method according to claim 10 or 11, wherein said supplicant translation table also maps said second supplicant to said first port, and wherein the testing method comprises transmitting said frame on said first port based on said supplicant translation table if the network apparatus needs to transmit a frame to said second supplicant.

13. A testing method of a computer apparatus, the testing method comprising generating at least a first and second supplicant having different identifiers indicating logical provenance from at least a first and second mutually different optical network terminals.

14. The testing method of claim 13, further comprising transmitting at least a first and second access requests of the first and second supplicant to a network apparatus via an intermediate optical network terminal situated between the computer apparatus and the network apparatus.

15. A computer readable medium comprising either instructions for causing a network apparatus according to any one of the claims 1-5 to perform at least the testing method of any one of the claims 9-12, or instructions for causing a computer apparatus according to any one of the claims 6-7 to perform at least the testing method according to any one of the claims 13-14.
